# EUROPEAN PATENT SPECIFICATION

(11) **EP 2 709 954 B1**
(45) Date of publication and mention of the grant of the patent: **04.05.2016**
(21) Application number: 11721715.8
(22) Date of filing: 17.05.2011
(51) Int. Cl.: C01F 7/02, C01F 17/00, C01G 3/02, C01G 5/00, C01G 25/02, C01G 31/02, C01G 37/02, C01G 53/04

(54) **METHOD FOR PREPARING METAL OXIDE NANOPARTICLES**
METHODE ZUR HERSTELLUNG VON METALLOXID NANOPARTIKELN
PROCÉDÉ POUR LA PRODUCTION DES NANOPARTICULES D'OXYDE MÉTALLIQUE

(43) Date of publication of application: 26.03.2014
(73) Proprietor: King Saud University, 11421 Riyadh (SA)
(72) Inventor: SIDDIQUI, Mohammed, Rafiq, Hussain, 11451 Riyadh (SA); AL-WARTHAN, Abdulrahman, 11451 Riyadh (SA); ADIL, Syed, Farooq, 11451 Riyadh (SA)
(74) Representative: Goddar, Heinz J.
(86) International application number: PCT/EP2011/002437
(87) International publication number: WO 2012/155931

(56) References cited:
- US-A1- 2007 018 140
- F. Y. JIANG, ET AL.: "Synthesis of iron oxide nanocubes via microwave-assisted solvothermal method", JOURNAL OF ALLOYS AND COMPOUNDS, vol. 503, 2010, pages L31-L33, XP002655191, Elsevier
- H. WANG, ET AL.: "Preparation of CuO nanoparticles by microwave irradiation", JOURNAL OF CRYSTAL GROWTH, vol. 244, 2002, pages 88-94, XP002655192, Elsevier
- I. BILECKA, ET AL.: "One-minute synthesis fo crystalline binary and ternary metal oxide nanoparticles", CHEMICAL COMMUNICATIONS, 2008, pages 886-888, XP002655193, RSC

## Description

The present invention relates to a method for preparing metal oxide nanoparticles.

For producing metal oxide nanoparticles a vapor-phase method, a solution method and a method using supercritical fluids are known. However, these methods have shortcomings in terms of solvent selection, cost, or yield rate which are limits for efficient mass production. Especially due to the presence of solvents, the methods known in the art are environmentally unfriendly and often require high energy consumption.

US 2007/0018140 A1 discloses a method of producing metal nanoparticles, said method comprising (a) producing a metal alkanoate by reacting a metal precursor with an alkanoate of an alkali metal, alkali earth metal, or ammonium in an aqueous solution; (b) filtrating and drying the metal alkanoate; and (c) heat-treating the alkanoate, preferably at a temperature of 180-350°C.

F. Y. JIANG, ET AL.: "Synthesis of iron oxide nanocubes via microwave-assisted solvothermal method", JOURNAL OF ALLOYS AND COMPOUNDS, vol. 503, 2010, pages L31-L33 describes the production of iron oxide nanoparticles by thermal decomposition of an iron oleate complex by subjecting a solution of ferric chloride, sodium oleate and oleic acid in ethanol and water to microwave treatment.

H. WANG, ET AL.: "Preparation of CuO nanoparticles by microwave irradiation", JOURNAL OF CRYSTAL GROWTH, vol. 244, 2002, pages 88-94, describes the production of copper oxide (CuO) nanoparticles by microwave irradiation of an ethanolic solution containing copper(II)acetate and sodium hydroxide.

I. BILECKA, ET AL.: "One-minute synthesis fo crystalline binary and ternary metal oxide nanoparticles", CHEMICAL COMMUNICATIONS, 2008, pages 886-888 describes the production of metal oxide nanoparticles by microwave irradiation of a solution containing copper(II) acetate.

It is therefore an object of the present invention to provide a method for preparing metal oxide nanoparticles which overcomes the drawbacks of the prior art. Especially, a method shall be provided which is environmentally friendly and provides nanoparticles in a short time.

This object is achieved by a method for preparing metal oxide nanoparticles, comprising the steps:
(i) subjecting a metal alkanoate to microwave radiation to obtain metal oxide nanoparticles,
(ii) optionally washing the metal oxide nanoparticles obtained in step (i), and/or
(iii) optionally storing the metal oxide nanoparticles in a dispersant.
wherein step (i) is carried out in the absence of solvent.

In one embodiment the alkanoate is a C₈-C₁₈ alkanoate, preferably oleate.

Even preferred the metal is selected from alkaline earth metals, group 3A metals, transition metals and lanthanide metals.

In one further preferred embodiment the metal is selected from silver, copper, chromium, nickel, zirconium, vanadium, aluminum and lanthanum.

It is preferred that the metal alkanoate is radiated for 5 minutes to 2 hours, preferably 5-50 minutes, more preferably 10-20 minutes.

Furthermore, the metal oxide nanoparticles may have a particle size of 1-500 nanometer.

Preferably, the metal oxide nanoparticles are washed in step (ii) at least ones with acetone and/or hexane.

Additionally, the dispersant can be a non-aqueous organic solvent, preferably hexane.

Surprisingly, it was found that when utilizing the inventive method metal oxide nanoparticles can be prepared in a very short time, preferably within 10-20 minutes. The inventive method provides metal oxide nanoparticles without using organic solvent, simply by synthesizing the nanoparticles by use of microwave radiation. The wave length of microwave radiation is not very critical, in principle any conventional microwave oven can be used in the inventive method. Further, it is a benefit of the inventive method that the yield of the nanoparticles obtained is satisfying, and usually yields in an amount of 80-95% can be achieved.

A number of metal alkanoate precursors can be chosen to allow the preparation of metal oxide nanoparticles in a very wide range. The inventive method requires only less energy, is environmentally friendly and thus can be considered generally as a green method for the synthesis of metal oxide nanoparticles.

Additional advantages and features of the method of the present invention can be taken from the following detailed description of the preferred embodiments with reference to the accompanying drawing wherein
Fig. 1 is a Transmission Electron Microgram (TEM) photography of silver oxide nanoparticles prepared according to the method of the present invention;
Fig. 2 is a further TEM photography of silver oxide nanoparticles prepared according to the method of the invention;
Fig. 3 is a Scanning Electron Microgram photography (SEM) of the silver oxide nanoparticles;
Figs. 4 and 5 are TEM photographies of copper oxide nanoparticles obtained by the method of the present invention;
Fig. 6 is a SEM photography of these copper oxide nanoparticles;
Fig. 7 is a SEM photography of chromium oxide nanoparticles obtained by the inventive method;
Fig. 8 is a SEM photography of nickel oxide nanoparticles obtained by the inventive method;
Fig. 9 is a SEM photography of zirconium oxide nanoparticles obtained by the inventive method;
Fig. 10 is a SEM photograpy of vanadium oxide nanoparticles obtained by a method of the present invention;
Fig. 11 is a SEM photography of aluminum oxide nanoparticles obtained by the inventive method; and
Fig. 12 is a SEM photography of lanthanum oxide nanoparticles obtained by the inventive method.

### Example 1

### Preparation of metal oleate

10 grams of metal nitrate, for example silver nitrate, is introduced into a beaker and dissolved in a minimum quantity of water. 5 grams of sodium oleate is introduced in another beaker and dissolved in a minimum quantity of water, with heating and stirring, using a hot plate stirrer. After complete dissolution of sodium oleate, the solution is allowed to cool down to room temperature. Then, the metal nitrate solution is added to the oleate solution, slowly while being stirred, and the metal oleate is formed as a solid. The precipitate obtained is filtered and dried in an oven to give a white powder. This powder has been characterized and confirms the formation of metal oleate, in the present case silver oleate.

Any other metal salts then metal nitrate can be utilized which can be dissolved in water. Any other sodium alkanoate than sodium oleate can be also utilized, preferably C₈-C₁₈ sodium alkanoate.

### Example 2

### Preparation of metal oxide nanoparticles

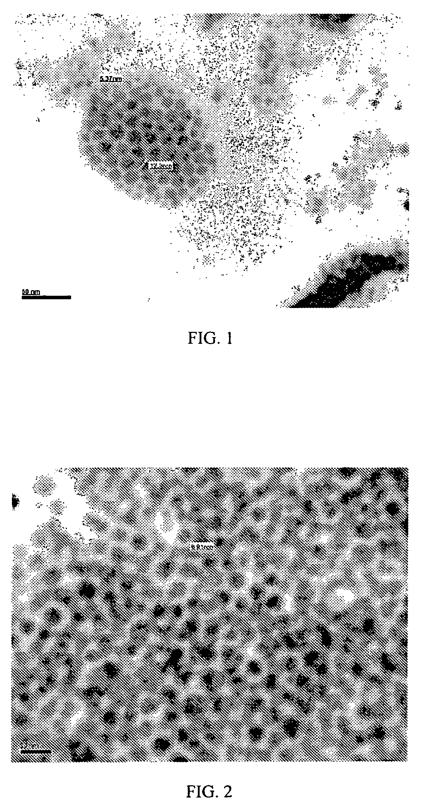

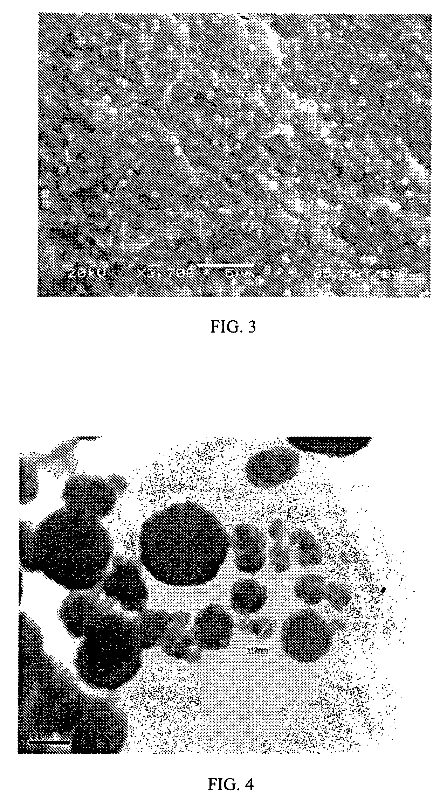

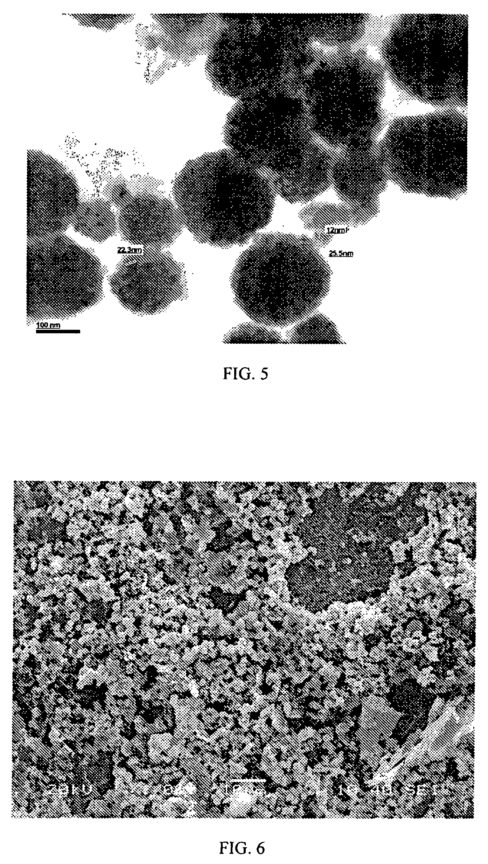

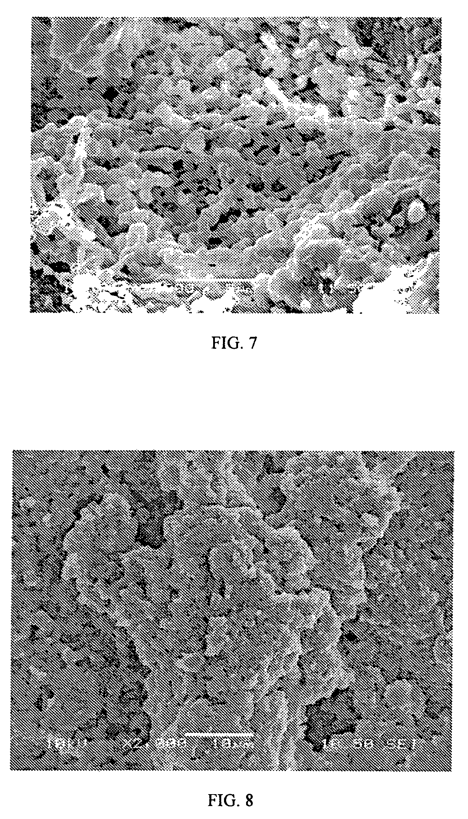

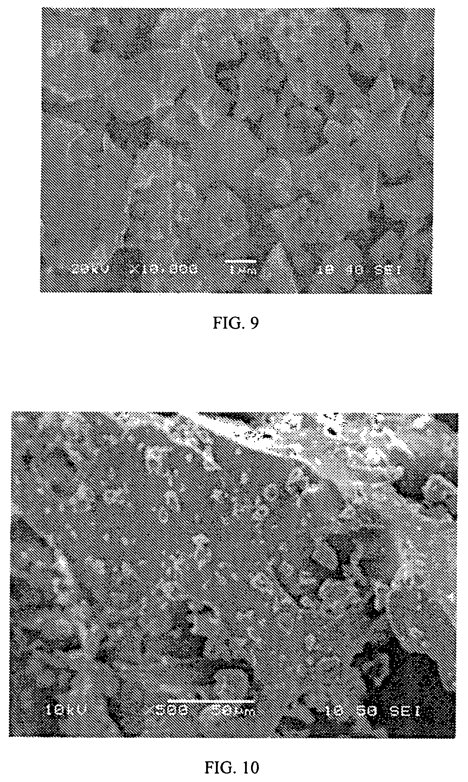

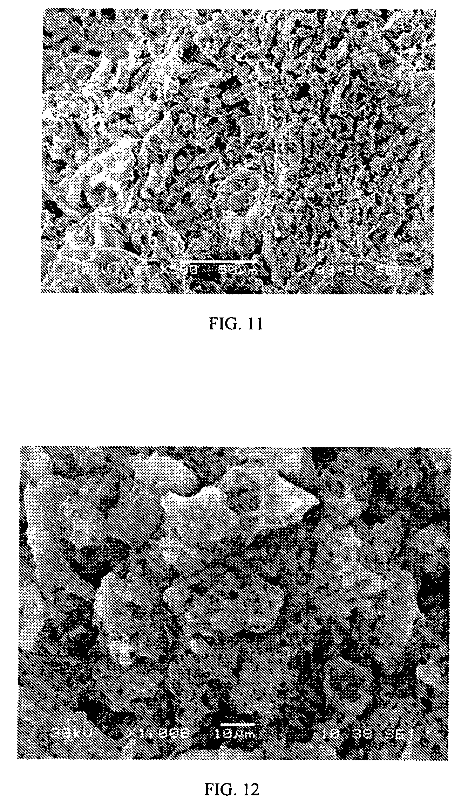

1 gram of metal oleate is taken in a watch glass and is subjected to microwave radiation for about 15 minutes. The content of the watch glass is then transferred to a centrifuge tube and washed with acetone and hexane, each twice. The solid obtained is stored dispersed in hexane. The sample is characterized by microscopic studies and is found to be nanoparticles. Several nanoparticles were synthesized by the above method and were characterized as can be taken from Figures 1-12. The elemental analysis of the nanoparticles prepared was confirmed by energy dispersive X-ray analysis.

Metal oxide nanoparticles utilizing silver oleate, copper oleate, chromium oleate, nickel oleate, zirconium oleate, vanadium oleate, aluminum oleate and lanthanum oleate were chosen. For silver oxide nanoparticles it was found to be of varying sizes from 5 nm to 15 nm as confirmed by Transmission Electron Microscopy (TEM). For copper oxide nanoparticles, a size from 10 nm to 120 nm was found. The size of zirconium oxide nanoparticles was found to be about 490 nm, and for lanthanum oxide nanoparticles a size from 10 nm to 130 nm was confirmed by TEM.

Thus, the inventive method allows the production of metal oxide nanoparticles in a simple manner without use of a solvent resulting in a method which is environmentally friendly and has only low energy requirement. The metal oxide nanoparticles prepared according to the method of the present invention can be utilized for a number of purposes well known in the art.

The features disclosed in the foregoing description, in the claims and drawings may, both separately and in any combination thereof, be material for realizing the invention in diverse forms.

## Claims

1. Method for preparing metal oxide nanoparticles, comprising the steps:
(i) subjecting a metal alkanoate to microwave radiation to obtain metal oxide nanoparticles,
(ii) optionally washing the metal oxide nanoparticles obtained in step (i), and/or
(iii) optionally storing the metal oxide nanoparticles in a dispersant,
wherein step (i) is carried out in the absence of solvent.

2. Method according to claim 1, wherein the alkanoate is a C₈-C₁₈ alkanoate, preferably oleate.

3. Method according to claim 1 or 2, wherein the metal is selected from alkaline earth metals, group 3A metals, transition metals and lanthanide metals.

4. Method according to claim 3, wherein the metal is selected from silver, copper, chromium, nickel, zirconium, vanadium, aluminum and lanthanum.

5. Method according to any of the preceding claims, wherein the metal alkanoate is irradiated for 5 minutes to 2 hours, preferably 5-50 minutes, more preferably 10-20 minutes.

6. Method according to any of the preceding claims, wherein the metal oxide nanoparticles have a particle size of 1-500 nanometer.

7. Method according to any of the preceding claims, wherein the metal oxide nanoparticles are washed in step (ii) at least once with acetone and/or hexane.

8. Method according to any of the preceding claims, wherein the dispersant is a non-aqueous organic solvent, preferably hexane.

## Patentansprüche

1. Verfahren zum Herstellen von Metalloxid-Nanoteilchen, welches die Schritte umfasst:
(i) Unterziehen eines Metallalkanoats einer Mikrowellenbestrahlung, um Metalloxid-Nanoteilchen zu erhalten,
(ii) optional Waschen der Metalloxid-Nanoteilchen, die in Schritt (i) erhalten werden, und/oder
(iii) optional Lagern der Metalloxid-Nanoteilchen in einem Dispersionsmittel,
wobei Schritt (i) in der Abwesenheit von Lösungsmittel durchgeführt wird.

2. Verfahren nach Anspruch 1, wobei das Alkanoat ein C₈-C₁₈-Alkanoat, bevorzugt Oleat, ist.

3. Verfahren nach Anspruch 1 oder 2, wobei das Metall ausgewählt ist aus Erdalkalimetallen, Metallen der Gruppe 3A, Übergangsmetallen und Lanthanidmetallen.

4. Verfahren nach Anspruch 3, wobei das Metall ausgewählt ist aus Silber, Kupfer, Chrom, Nickel, Zirkonium, Vanadium, Aluminium und Lanthan.

5. Verfahren nach einem der vorangehenden Ansprüche, wobei das Metallalkanoat für 5 Minuten bis 2 Stunden, bevorzugt 5-50 Minuten, noch bevorzugter 10-20 Minuten, bestrahlt wird.

6. Verfahren nach einem der vorangehenden Ansprüche, wobei die Metalloxid-Nanoteilchen eine Teilchengröße von 1-500 Manometer aufweisen.

7. Verfahren nach einem der vorangehenden Ansprüche, wobei die Metalloxid-Nanoteilchen in Schritt (ii) wenigstens einmal mit Aceton und/oder Hexan gewaschen werden.

8. Verfahren nach einem der vorangehenden Ansprüche, wobei das Dispersionsmittel ein nicht-wässriges organisches Lösungsmittel, bevorzugt Hexan, ist.

## Revendications

1. Procédé de préparation de nanoparticules d'un oxyde métallique, qui comprend les étapes consistant à :
(i) soumettre un alcanoate métallique à une irradiation micro-ondes pour obtenir des nanoparticules d'un oxyde métallique,
(ii) en option laver les nanoparticules de l'oxyde métallique obtenues à l'étape (i), et/ou
(iii) en option stocker les nanoparticules de l'oxyde métallique dans un dispersant,
l'étape (i) étant effectuée en l'absence d'un solvant.

2. Procédé selon la revendication 1, dans lequel l'alcanoate est un alcanoate en C₈-C₁₈, préférablement un oléate.

3. Procédé selon la revendication 1 ou 2, dans lequel le métal est sélectionné parmi des métaux alcalino-terreux, des métaux du groupe 3A, des métaux de transition et des métaux de la série des lanthanides.

4. Procédé selon la revendication 3, dans lequel le métal est sélectionné parmi l'argent, le cuivre, le chrome, le nickel, le zirconium, le vanadium, l'aluminium et le lanthane.

5. Procédé selon l'une quelconque des revendications précédentes, dans lequel l'alcanoate métallique est irradié pendant de 5 minutes à 2 heures, préférablement pendant 5-50 minutes et plus préférablement pendant 10-20 minutes.

6. Procédé selon l'une quelconque des revendications précédentes, dans lequel les dimensions des nanoparticules de l'oxyde métallique sont de 1-500 nanomètres.

7. Procédé selon l'une quelconque des revendications précédentes, dans lequel à l'étape (ii), les nanoparticules de l'oxyde métalliques sont lavées au moins une fois à l'acétone et/ou l'hexane.

8. Procédé selon l'une quelconque des revendications précédentes, dans lequel le dispersant est un solvant organique non aqueux, préférablement l'hexane.
